# EUROPEAN PATENT SPECIFICATION

(11) **EP 4 074 530 B1**
(45) Date of publication and mention of the grant of the patent: **28.02.2024**
(21) Application number: 22165808.1
(22) Date of filing: 31.03.2022
(51) Int. Cl.: B60J 1/20

(54) **DEVICE FOR SCREENING A WINDOW OF A VEHICLE**
VORRICHTUNG ZUM ABSCHIRMEN EINES FAHRZEUGFENSTERS
DISPOSITIF D'OBTURATION D'UNE VITRE DE VÉHICULE

(30) Priority: 15.04.2021 IT 202100009542
(43) Date of publication of application: 19.10.2022
(73) Proprietor: LCI Italy S.r.l., 50026 San Casciano in Val di Pesa (FI) (IT)
(72) Inventor: MORELLI, Dario, 50018 Scandicci (Firenze) (IT)
(74) Representative: Firmati, Leonardo

(56) References cited:
- EP-A1- 0 592 855
- CN-U- 208 021 146
- DE-U1- 29 612 722

## Description

This invention relates to a device for screening a window of a vehicle.

In the sector of vehicles, such as, for example, camper vans and motor homes, the use of large windscreens and windows is preferred in order to illuminate as much as possible both the driver's cab and the habitable area of the vehicle.

However, this situation has drawbacks, partly due precisely to the size of the windscreen and windows.

In fact, in order to screen the cabin of the vehicle it is necessary to use screening fabrics or curtains which are applied to the outside or the inside the window.

In both cases, these fabrics are usually stored inside the cabin, and when required they are positioned on the window and locked, using systems for attachment to the frame of the vehicle.

These solutions have the drawback due to the fact that the screens, when not used, occupy the space, which is already limited, designed for storing objects in the cabin of the vehicle.

Moreover, these screens, being detachable from the window, risk being forgotten or left in the most varied of places.

For this reason, there are prior art solutions which involve the use of screening devices fixed stably to the window, and which have at least two configurations, one open and one closed.

In the open configuration the screen engages the window, thereby creating the screening of the window, whilst in the closed configuration the screen is positioned to the side of the window, freeing up the view.

In this way, the use of the spaces in the cabin of the vehicle is optimised.

However, these solutions also have drawbacks.

Firstly, it is necessary to have a different type of screening device for each type of window, or for different shapes of the window.

Moreover, these solutions usually use a counterframe positioned on the screen, for example of the telescopic type, which makes the structure bulky, and more easily subject to breakages, as well as being more expensive. An example of device for screening a window is described in patent documents DE29612722U1.

The aim of the invention is therefore to provide a device for screening a window of a vehicle which is able to overcome the above-mentioned drawbacks of the prior art. A further aim of the invention is to provide a device for screening a window which is at the same time practical to use and simple and inexpensive to make. According to the invention, these aims and others are achieved by a device for screening a window of a vehicle comprising the technical features described in the accompanying claims.

The technical features of the invention, with reference to the above-mentioned aims, are clearly described in the appended claims and its advantages are apparent from the detailed description which follows, with reference to the accompanying drawings which illustrate a purely non-limiting example embodiment of the invention, in which:
- Figure 1 is a schematic perspective view of an embodiment of the device for screening a window of a vehicle according to the invention;
- Figure 2 is a schematic perspective view of an enlarged detail of the device of Figure 1;
- Figures 3 and 4 are a schematic axonometric view of two different configurations of use of the device of Figure 1.

With reference to the accompanying drawings, the numeral 1 denotes in its entirety a device for screening a window F of a vehicle V made in accordance with the invention, hereinafter also referred to simply as the device 1. With reference to the accompanying drawings, the device 1 comprises a frame 2, a first rail 3 and a screen 4. The frame 2 of the device 1 is stably engaged with the vehicle V.

For example, the frame 2 is engaged with the vehicle V by means of screw 20.

The screws 20 define for the device 1 means for locking the frame 2 to the vehicle V.

The frame 2 comprises a first upright 21, and a second upright 22.

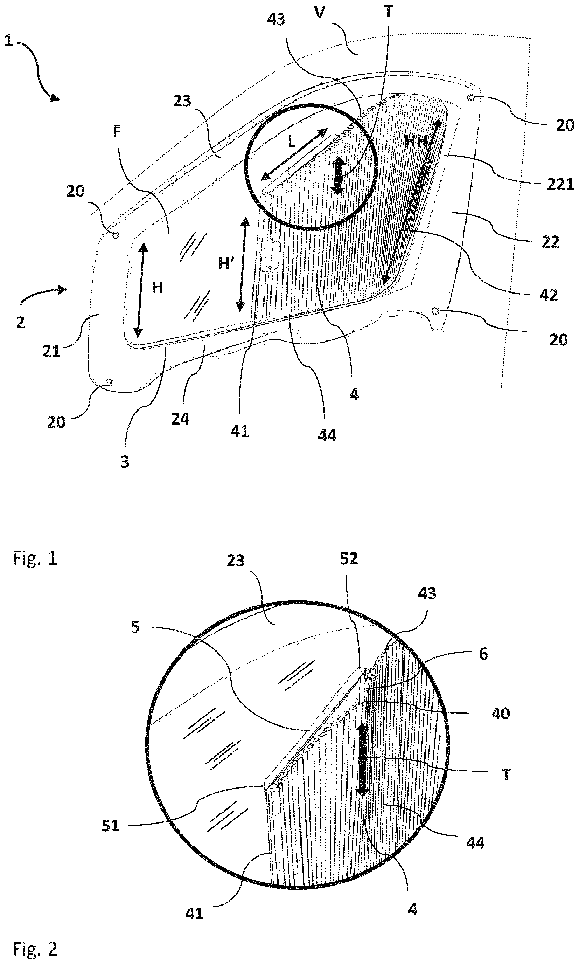

The term "upright" means a structural element with a substantially vertical extension relative to the ground. A first 23 and a second 24 transversal element are positioned transversally to the first 21 and to the second 22 upright, in such a way as to define a supporting structure to be stably fixed to the vehicle V, as illustrated in Figure 1.

For example, the frame 2 is arranged on the window of a door or a hatchback of the vehicle V.

Advantageously, one of either the first 21 or the second 22 upright has a containment compartment.

With reference to the accompanying drawings, the upright 22 has the containment compartment 221.

The containment compartment 221 allows the screen 4 to be stored when it is not used.

With reference to the accompanying drawings, the containment compartment 221 is made between the frame 2 of the device 1 and the frame of the vehicle V.

The first rail 3 is positioned between the first 21 and the second 22 upright.

The first rail 3 is at least partly hidden from view by the second transversal element 24.

Further, the second transversal element 24 contributes to supporting the first rail 3, to prevent undesired oscillations of the first rail 3.

The first rail 3 advantageously has an oval cross-section to prevent the screen 4 from tilting in a direction of rotation coinciding with the first rail 3.

In other words, this prevents the screen 4 from oscillating, or even tipping over, towards the inside, or towards the outside, of the window F.

The screen 4 is of the retractable type, in such a way that it can be easily stored, occupying a relatively small space.

In this regard, the screen is made of materials chosen from among plastic, elastic, textile materials or a combination of these, such as to withstand a fatigue stress for a predetermined number of screen opening and closing cycles.

Advantageously, the screen 4 is made of materials such as to occupy a limited volume, in such a way as to reduce the total dimensions of the device 1.

The screen 4 comprises a front edge 41 which is free to slide on the first rail 3, and a rear edge 42 fixed to the second upright 22.

The screen 4 also comprises an upper edge 43 extending between the front edge 41 and the second upright 22. The screen 4 also comprises a lower edge 44, opposite the upper edge 43, for engaging on the first rail 3. With reference to the accompanying drawings, the screen 4 is of the cell-like type.

In other words, the screen 4 comprises a plurality of closed cells 44 in such a way that each cell 44 defines a sort of tubular structure, as illustrated in Figure 2. The screen 4 advantageously has a concertina shape, like a fan, for facilitating the packing of the screen 4 when it is closed.

The device 1 also comprises a connecting rod 5 and a bracket 6.

The connecting rod 5 is hinged with a relative first end 51 to the front edge 41 of the screen 4, and extends on the upper edge 43.

The connecting rod 5 engages with the upper edge 43 of the screen 4 only partly.

In fact, when the screen is closed, the connecting rod 5 defines part of the closing and locking surface SC screen 4 in the containment compartment 221.

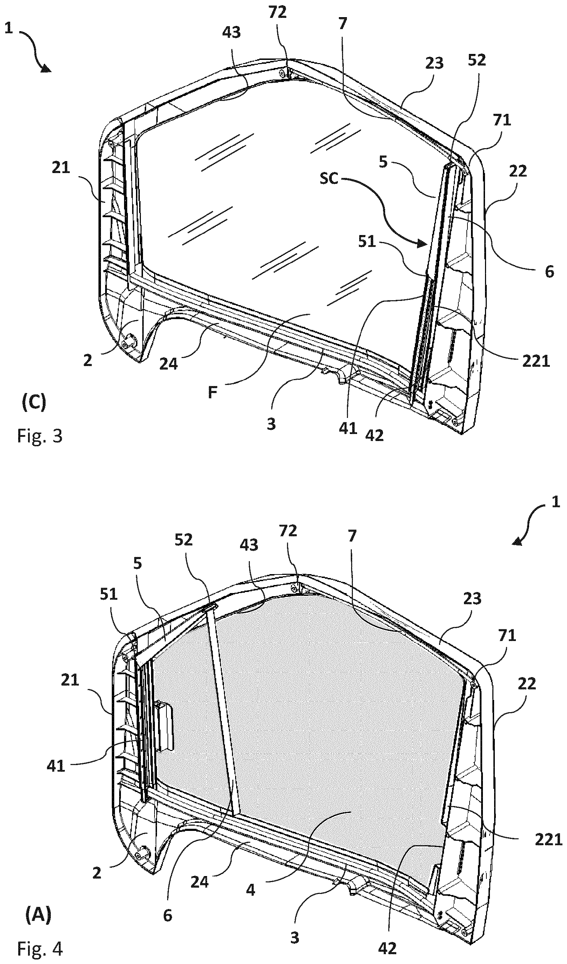

The closing surface SC is defined by the front edge 41 and the connecting rod 5 in the first non-operating configuration C, as described below and illustrated in Figure 3.

The length L of the connecting rod 5 is determined by the geometrical shape of the window F, as shown in Figure 1.

More specifically, the height H of the first upright 21 defines the height H' of the front edge 41.

That is to say, the height H' is equal to the height H except for the tolerances necessary for the correct sliding of the screen 4 and an adequate engagement of the front edge 41 with the first upright 21.

The difference between the height HH of the second upright 22 and the height H' of the front edge 41 defines the length L of the connecting rod 5, except for tolerances necessary for the correct sliding of the screen 4.

In other words, L = HH - H' = HH - H.

In that way it is possible to easily adapt the device 1 to different shapes of the window F.

Geometrically, it would not be possible to use a connecting rod 5 with length L equal to the length of the upper edge 43, except in the case of a window F with a triangular shape, that is to say, with height H and H' equal to zero, or practically equal to zero.

The bracket 6 is hinged at a second end 52 of the connecting rod 5, as illustrated in Figure 2. Advantageously, the bracket 6 is supported by the screen 4.

In effect, the screen 4 comprises at least one seat 40 for housing the bracket 6, as illustrated in Figure 2.

More specifically, with reference to the accompanying drawings, the bracket 6 is inserted in one of the cells 44, for translating in the direction T by sliding within one of the cells 44, as described in more detail below. The device 1 comprises a second rail 7 configured to engage with part of the upper edge 43 of the screen 4. In that way, it is supported by the screen 4 which is thus more easily maintained in position, that is to say, preventing the screen 4 from tipping and facilitating its sliding.

The second rail 7 is constrained by a relative first end 71 to the second upright 22, and by a relative second end 72 to the frame 2.

More specifically, the second end 72 is stably connected to the first transversal element 23 of the frame 2, engaging the first transversal member 23 only partly. This allows the constructional structure to be simplified and to easily adapt the device 1, and more specifically, the screen 4, to different shapes of the window F.

In use, the screen 4 is configured to translate on the first rail 3 for moving between a first non-operating configuration C, wherein the screen 4 is entirely positioned inside the containment compartment 221, and at least a second operating configuration A, wherein the front edge 41 is at the first upright 21 and the screen 4 is extended between the first 21 and the second 22 upright.

More specifically, Figure 3 shows the first non-operative configuration C.

According to this configuration the screen 4 is placed inside the containment compartment 221.

The front edge 41 and the connecting rod 5 are coplanar and aligned along the same direction so as to define the closing surface SC of the screen 4 inside the containment compartment 221.

In that configuration the bracket 6 is aligned with the connecting rod 5, in such a way as to occupy as little space as possible.

Starting from the first non-operating configuration C, illustrated in Figure 3, the device 1 moves to a second operating configuration A, shown in Figure 4.

In order to move to this configuration, the screen 4 translates along the first rail 3, and the second rail 7.

During the passage of the screen 4 from the first non-operating configuration C to the second operating configuration A, the bracket 6 translates along a direction T transversal to the first rail 3 and belonging to the plane defined by the frame 2.

The translation of the bracket 6 thus allows the rotation of the connecting rod 5 to be determined, in such a way that the connecting rod 5 can be adapted to different configurations of use.

Moreover, the bracket 6 allows the screen 4 to be supported and to keep it in position to cover the window F in the second operating configuration A, without the screen 4 folding bask on itself.

This also prevents accidental breakage of the screen 4, since it is possible to more easily keep it in position.

During the forward movement of the screen 4 along the first rail 3, the connecting rod 5 also facilitates the driving of the screen 4, contributing to imparting a force on the front edge 41.

By pulling the screen 4 up to the first upright 21, the window F is completely covered by the screen 4, and thus screened.

Subsequently, starting from the second operating configuration A, shown in Figure 4, the device 1 returns to a first non-operating configuration C, illustrated in Figure 3.

In that way, the window F is freed from the screen 4. According to embodiments not illustrated, the containment compartment 221 is made in the form of a box-shaped element stably connected to the frame 2. Advantageously, the box-shaped element is applied at one of either the first 21 or the second 22 upright. According to embodiments not illustrated, the screen 4 is of the heat insulating type, in such a way as to allow both the screening of the window F and the thermal insulation of the vehicle V.

The device 1 comprises at least one magnet, not illustrated, positioned at least at one between the first upright 21 and the second upright 22 for firmly fixing the screen 4 in the second operating configuration A and in the first non-operating configuration C, respectively.

Grips of different types, such as, for example, handles, are positioned on the screen 4, so as to facilitate the translation along the rail 3.

The device for screening a window of a vehicle according to the invention achieves the preset aims and brings important advantages.

A first advantage of the screening device according to the invention is the possibility of making a device which can be easily adapted to different shapes of the window. Another advantage is the possibility of reducing the risk of breakages of the screen and/or the device after repeated use of the screen.

A further advantage is due to the fact that the screen may be hidden from view.

Yet another advantage is due to the possibility of keeping the screen in position, being able to omit, at least partly, the upper rail, or in any case reduce it. Yet another advantage is the possibility of reducing the constructional complexity of a screening device.

## Claims

1. A device for screening a window (F) of a vehicle (V), comprising:
- a frame (2) configured to be stably engaged with said vehicle (V), said frame (2) comprising a first upright (21), and a second upright (22) presenting a containment compartment (221);
- a first rail (3) disposed between said first (21) and said second (22) upright;
- a retractable screen (4) comprising a front edge (41) free to slide on said first rail (3), and a rear edge (42) attached to said second upright (22), said screen (4) being configured for translating on said first rail (3) for moving between a first non-operating configuration (C), wherein said screen (4) is entirely positioned inside the containment compartment (221), and at least a second operating configuration (A), wherein said front edge (41) is at said first upright (21) and said screen (4) is extended between said first (21) and said second (22) upright, said screen (4) comprising an upper edge (43) extending between said front edge (41) and said second upright (22), **characterised in that** it further comprises:
- a connecting rod (5) hinged with a first end (51) thereof to said front edge (41), and extending on said upper edge (43);
- a bracket (6) hinged to a second end (52) of said connecting rod (5), said bracket (6) being configured to translate, according to a direction (T) transversal to said first rail (3) and belonging to the plane defined by said frame (2), during the passage of said screen (4) from said first non-operating configuration (C) to said second operating configuration (A), said bracket (6) being supported by said screen (4).

2. The device according to claim 1, **characterised in that** said connecting rod (5) engages said upper edge (43) only partly.

3. The device according to claim 1, **characterised in that** said screen (4) comprises at least one seat (40) for housing said bracket (6) in said seat (40).

4. The device according to any one of the preceding claims, **characterised in that** said screen (4) is of the cell-like type.

5. The device according to the preceding claim, **characterised in that** said screen (4) comprises a plurality of closed cells (44), said bracket (6) being inserted in one of said cells (44) of said plurality, for translating along said direction (T) by sliding within one of said cells (44).

6. The device according to any one of the preceding claims, **characterised in that** it comprises a second rail (7) configured to engage with part of said upper edge (43) of said screen (4), said second rail (7) being constrained by a relative first end (71) to said second upright (22), and by a second end (72) to said frame (2).

7. The device according to any one of the preceding claims, **characterised in that** said first rail (3) has an oval cross section to prevent the tilting of said screen (4) in a direction of rotation coinciding with said first rail (3).

8. The device according to any one of the preceding claims, **characterised in that** it comprises at least one magnet positioned at least at one of said first upright (21) and second upright (22) for firmly fixing said screen (4) respectively in said second operating configuration (A) and in said first non-operating configuration (C).

9. The device according to any one of the preceding claims, **characterised in that** said screen (4) is of the thermally insulating type.

## Patentansprüche

1. Vorrichtung zum Verdunkeln (Abschirmen) eines Fensters (F) eines Fahrzeugs (V), umfassend:
- einen Rahmen (2), der dafür ausgelegt ist, an dem Fahrzeug (V) festgelegt zu werden, wobei der Rahmen (2) einen ersten Pfosten (21) und einen zweiten Pfosten (22), der ein Aufnahmefach (221) aufweist, umfasst;
- eine erste Schiene (3), die zwischen dem ersten (21) und zweiten (22) Pfosten angeordnet ist;
- eine einziehbare Verdunkelung (4), umfassend eine vordere Kante (41), die frei auf der ersten Schiene (3) gleiten kann, und eine hintere Kante (42), die an dem zweiten Pfosten (22) befestigt ist, wobei die Verdunkelung (4) dafür ausgelegt ist, eine Translationsbewegung auf der ersten Schiene (3) auszuführen, um sich zu bewegen zwischen einer ersten Nichtbetriebskonfiguration (C), in der die Verdunkelung (4) vollständig innerhalb des Aufnahmefachs (221) angeordnet ist, und zumindest einer zweiten Betriebskonfiguration (A), in der sich die vordere Kante (41) an dem ersten Pfosten (21) befindet und die Verdunkelung (4) zwischen dem ersten (21) und dem zweiten (22) Pfosten ausgebreitet ist, wobei die Verdunkelung (4) eine obere Kante (43) umfasst, die sich zwischen der vorderen Kante (41) und dem zweiten Pfosten (22) erstreckt, **dadurch gekennzeichnet, dass** sie ferner umfasst:
- eine Verbindungsstange (5), die mit einem ersten Ende (51) davon an der vorderen Kante (41) angelenkt ist und die sich auf der oberen Kante (43) erstreckt;
- eine Halterung (6), die an einem zweiten Ende (52) der Verbindungsstange (5) angelenkt ist, wobei die Halterung (6) dafür ausgelegt ist, sich in einer Richtung (T) zu bewegen, die quergerichtet zu der ersten Schiene (3) ist und auf der durch den Rahmen (2) definierten Ebene liegt, während die Verdunkelung (4) von der ersten Nichtbetriebskonfiguration (C) in die zweite Betriebskonfiguration (A) übergeht, wobei die Halterung (6) von der Verdunkelung (4) getragen wird.

2. Vorrichtung nach Anspruch 1, **dadurch gekennzeichnet, dass** die Verbindungsstange (5) nur teilweise mit der oberen Kante (43) in Eingriff steht.

3. Vorrichtung nach Anspruch 1, **dadurch gekennzeichnet, dass** die Verdunkelung (4) zumindest einen Sitz (40) umfasst, um die Halterung (6) in dem Sitz (40) aufzunehmen.

4. Vorrichtung nach einem der vorhergehenden Ansprüche, **dadurch gekennzeichnet, dass** die Verdunkelung (4) vom wabenartig aufgebauten Typ ist.

5. Vorrichtung nach dem vorhergehenden Anspruch, **dadurch gekennzeichnet, dass** die Verdunkelung (4) eine Vielzahl geschlossener Waben (44) umfasst, wobei die Halterung (6) in eine der Waben (44) der genannten Vielzahl eingeführt ist, um sich entlang der Richtung (T) zu bewegen, indem sie innerhalb einer der Waben (44) gleitet.

6. Vorrichtung nach einem der vorhergehenden Ansprüche, **dadurch gekennzeichnet, dass** sie eine zweite Schiene (7) umfasst, die dafür ausgelegt ist, mit einem Teil der oberen Kante (43) der Verdunkelung (4) in Eingriff zu gelangen, wobei die zweite Schiene (7) mit einem entsprechenden ersten Ende (71) an dem zweiten Pfosten (22) festgelegt ist, und mit einen zweiten Ende (72) an dem Rahmen (2) festgelegt ist.

7. Vorrichtung nach einem der vorhergehenden Ansprüche, **dadurch gekennzeichnet, dass** die erste Schiene (3) einen ovalen Querschnitt aufweist, um das Kippen der Verdunkelung (4) in einer Drehrichtung zu vermeiden, die mit der ersten Schiene (3) übereinstimmt.

8. Vorrichtung nach einem der vorhergehenden Ansprüche, **dadurch gekennzeichnet, dass** sie zumindest einen Magneten umfasst, der zumindest an einem, ausgewählt aus dem ersten Pfosten (21) und dem zweiten Pfosten (22) angeordnet ist, um die Verdunkelung (4) jeweils fest in der zweiten Betriebskonfiguration (A) beziehungsweise in der ersten Nichtbetriebskonfiguration (C) zu fixieren.

9. Vorrichtung nach einem der vorhergehenden Ansprüche, **dadurch gekennzeichnet, dass** die Verdunkelung (4) vom thermisch isolierenden Typ ist.

## Revendications

1. Un dispositif d'occultation d'une vitre (F) d'un véhicule (V), comprenant :
- un cadre (2) configuré pour être assujetti de façon stable audit véhicule (V), ledit cadre (2) comprenant un premier montant (21), et un deuxième montant (22) présentant un compartiment de logement (221) ;
- un premier rail (3) disposé entre ledit premier (21) et ledit deuxième (22) montant ;
- un écran rétractable (4) comprenant un bord avant (41) libre de coulisser sur ledit premier rail (3), et un bord arrière (42) fixé audit deuxième montant (22), ledit écran (4) étant configuré pour translater sur ledit premier rail (3) pour se déplacer entre une première configuration non opérationnelle (C), dans laquelle ledit écran (4) est entièrement positionné à l'intérieur du compartiment de logement (221), et au moins une deuxième configuration opérationnelle (A), dans laquelle ledit bord avant (41) est au niveau dudit premier montant (21) et ledit écran (4) est étendu entre ledit premier (21) et ledit deuxième (22) montant, ledit écran (4) comprenant un bord supérieur (43) s'étendant entre ledit bord avant (41) et ledit deuxième montant (22), **caractérisé en ce qu'**il comprend en outre :
- une tige de liaison (5) articulée avec une première extrémité (51) respective audit bord avant (41), et s'étendant sur ledit bord supérieur (43) ;
- une patte (6) articulée au niveau d'une deuxième extrémité (52) de ladite tige de liaison (5), ladite patte (6) étant configurée pour translater, selon une direction (T) transversale audit premier rail (3) et appartenant au plan défini par le cadre (2), durant le passage dudit écran (4) de ladite première configuration non opérationnelle (C) à ladite deuxième configuration opérationnelle (A), ladite patte (6) étant supportée par ledit écran (4).

2. Le dispositif selon la revendication 1, **caractérisé en ce que** ladite tige de liaison (5) assujettit ledit bord supérieur (43) en partie seulement.

3. Le dispositif selon la revendication 1, **caractérisé en ce que** ledit écran (4) comprend au moins un siège (40) pour loger ladite patte (6) dans ledit siège (40).

4. Le dispositif selon l'une quelconque des revendications précédentes, **caractérisé en ce que** ledit écran (4) est de type alvéolaire.

5. Le dispositif selon la revendication précédente, **caractérisé en ce que** ledit écran (4) comprend une pluralité d'alvéoles fermés (44), ladite patte (6) étant insérée dans un desdits alvéoles (44) de ladite pluralité, pour translater le long de ladite direction (T) en coulissant à l'intérieur d'un desdits alvéoles (44).

6. Le dispositif selon l'une quelconque des revendications précédentes, **caractérisé en ce qu'**il comprend un deuxième rail (7) configuré pour s'assujettir avec une partie dudit bord supérieur (43) dudit écran (4), ledit deuxième rail (7) étant contraint par une première extrémité (71) correspondante audit deuxième montant (22), et par une deuxième extrémité (72) audit cadre (2).

7. Le dispositif selon l'une quelconque des revendications précédentes, **caractérisé en ce que** ledit premier rail (3) a une section ovale pour empêcher le basculement dudit écran (4) dans une direction de rotation coïncidant avec ledit premier rail (3).

8. Le dispositif selon l'une quelconque des revendications précédentes, **caractérisé en ce qu'**il comprend au moins un aimant positionné au moins au niveau d'un entre ledit premier montant (21) et ledit deuxième montant (22) pour fixer solidement ledit écran (4) respectivement dans ladite deuxième configuration opérationnelle (A) et dans ladite première configuration non opérationnelle (C).

9. Le dispositif selon l'une quelconque des revendications précédentes, **caractérisé en ce que** ledit écran (4) est de type thermiquement isolant.
